Europäisches Patentamt

European Patent Office

Office européen des brevets

(11) Numéro de publication: **0 491 615 B1**

# (12) FASCICULE DE BREVET EUROPEEN

(45) Date de publication de fascicule du brevet: **25.01.95**   (51) Int. Cl.6: **C10B 53/00**, A62D 3/00

(21) Numéro de dépôt: **91403415.2**

(22) Date de dépôt: **17.12.91**

(54) **Procédé de vitrification de déchets et dispositif de mise en oeuvre.**

(30) Priorité: **18.12.90 FR 9015850**

(43) Date de publication de la demande:
**24.06.92 Bulletin  92/26**

(45) Mention de la délivrance du brevet:
**25.01.95 Bulletin  95/04**

(84) Etats contractants désignés:
**BE DE DK ES FR GB GR IT LU NL**

(56) Documents cités:
**EP-A- 0 290 974**
**WO-A-88/02284**
**AT-A- 379 091**

(73) Titulaire: **ELECTRICITE DE FRANCE Service National**
**2, rue Louis Murat**
**F-75008 Paris (FR)**

(72) Inventeur: **Guenard, Jean**
**2 Impasse des Ouatre-Vents**
**F-911190 Gif sur Yvette (FR)**
Inventeur: **Bourdil, Claude**
**40, rue Condorcet**
**F-78500 Sartrouville (FR)**
Inventeur: **Liagre, François**
**16, rue Denfert Rochereau**
**F-94170 Le Perreux sur Marne (FR)**

(74) Mandataire: **Martin, Jean-Jacques**
**Cabinet REGIMBEAU**
**26, Avenue Kléber**
**F-75116 Paris (FR)**

## Description

La présente invention concerne un procédé de vitrification de déchets enfermés dans un conteneur. Elle concerne également un dispositif de mise en oeuvre de ce procédé.

L'invention trouve une application particulièrement avantageuse dans le domaine du traitement des déchets sans préjudice pour l'environnement.

L'incinération est un procédé très répandu actuellement pour traiter les déchets de toute sorte : ordures ménagères, déchets hospitaliers, déchets industriels banals et toxiques, pneumatiques, etc. S'il permet effectivement de détruire un grand nombre de produits en les réduisant en mâchefer, le procédé par incinération n'est pas dépourvu d'inconvénients. En effet, dans le cas des déchets hospitaliers par exemple, il arrive que les bactéries et virus ne soient pas totalement détruits par l'incinération, et les cendres volantes comportent une part importante de métaux lourds toxiques dont les mâchefers ne sont pas exempts non plus. Les résidus d'incinération pour lesquels le degré de toxicité ou d'activité bactérienne ou virale est trop élevé doivent alors être stockés dans des décharges contrôlées. Il faut également noter que l'incinération des pneumatiques se fait dans de meilleures conditions dans les installations classiques quand ils ont été dilacérés avant leur introduction dans le four.

Aussi, le problème technique à résoudre par l'objet de la présente invention est de proposer un procédé et un dispositif de vitrification de déchets enfermés dans un conteneur, notamment des pneumatiques introduits tels quels, qui permettraient de transformer lesdits déchets en produits chimiquement et bactériologiquement inertes.

La solution au problème technique posé est, selon la présente invention, notamment remarquable en ce que, ledit conteneur étant réalisé en un matériau de température de fusion $T_c$, ledit procédé comprend les étapes consistant, dans un four porté à une température moyenne $T_f$ supérieure à $T_c$ par un générateur haute température à jet de chaleur dirigé selon un axe D et dont la température de jet est $T_j$,

- à placer le conteneur dans le four, sur l'axe dudit jet de chaleur, la différence de température $T_f-T_c$ étant ajustée de telle sorte que, dans une première étape précédant la fusion du conteneur, ledit jet de chaleur perce localement ledit conteneur et amène les déchets ainsi confinés à une température $T_d$ supérieure à la température moyenne $T_f$ du four, les températures vérifiant alors les inégalités :

$$T_j > T_d > T_f > T_c ,$$

- à réaliser, dans une deuxième étape suivant la fusion du conteneur, la vitrification complète en défaut d'air du conteneur et des déchets en un magma vitreux, à une température sensiblement égale à la température moyenne $T_f$ du four,
- à récupérer ledit magma vitreux hors du four.

Dans l'ensemble du présent texte, le terme "vitreux" signifie que le magma est un solide homogène à structure non cristalline ; le terme "vitrification" désigne l'action consistant à rendre vitreux par fusion.

Ainsi, pendant tout le temps qui précède la fusion du conteneur, un fût en acier par exemple, on réalise un effet de confinement des déchets à l'intérieur du conteneur qui permet, à travers le trou percé localement dans la partie de paroi du conteneur la plus proche du générateur haute température, d'amener les déchets à une température sensiblement plus élevée que la température du four. Il en résulte une destruction beaucoup plus complète et une vitrification plus rapide des déchets et donc un meilleur rendement énergétique du dispositif de mise en oeuvre correspondant.

Un autre avantage du procédé selon l'invention est que, du fait du confinement des déchets dans le conteneur, pour les cendres volantes riches en métaux lourds, celles-ci sont vitrifiées avant de pouvoir être entraînées en sortie du four sous l'effet du flux de chaleur, évitant ainsi un traitement complexe et spécifique ultérieur des fumées qui, en tout état de cause, se terminerait par un stockage dans une décharge contrôlée.

On notera également que les conteneurs sont introduits dans le four tels quels, en l'état, ce qui présente l'avantage par rapport à l'incinération classique d'éviter des opérations préalables d'ouverture des conteneurs et de broyage.

Selon le procédé de l'invention, les conteneurs à traiter sont introduits dans le four de manière discontinue, un conteneur en remplaçant un autre après vitrification complète. De manière à pouvoir automatiser le dispositif de mise en oeuvre correspondant, il convient de pouvoir détecter le moment où la vitrification d'un conteneur et des déchets qu'il contient est achevée. Dans ce but, la présente invention prévoit qu'un paramètre significatif de la fin de vitrification est mesuré afin de commander l'introduction dans le four d'un nouveau conteneur. Ce paramètre est choisi en fonction des fumées, dites fumées primaires, qui sont produites lors de la vitrification. Dans un mode de réalisation de l'invention concernant plus spécialement les matières minérales inorganiques, la vitrification produisant des fumées primaires dépourvues de pouvoir calorifique, ledit paramètre est la température du four.

D'une façon générale, le procédé de vitrification de l'invention est réalisé par pyrolyse, c'est-à-dire en manque d'air. C'est pourquoi il est prévu, dans le cas de matières organiques, que, la vitrification produisant des fumées primaires présentant un pouvoir calorifique résiduel, lesdites fumées primaires sont traitées par une unité de post-combustion couplée au four. Dans ce cas, et selon un autre mode de réalisation concernant la mesure du paramètre de fin de vitrification, ledit paramètre est la teneur, dans l'unité de post-combustion, d'un gaz résultant de la combustion desdites fumées primaires. Ce gaz peut être, par exemple, du monoxyde ou du dioxyde de carbone.

La description qui va suivre en regard des dessins annexés, donnés à titre d'exemples non limitatifs, fera bien comprendre en quoi consiste l'invention et comment elle peut être réalisée.

La figure 1 est un schéma d'un dispositif de mise en oeuvre du procédé conforme à l'invention.

La figure 2 est une vue de côté en coupe du four du dispositif de la figure 1.

La figure 3 est une vue de dessus en coupe du four du dispositif de la figure 1.

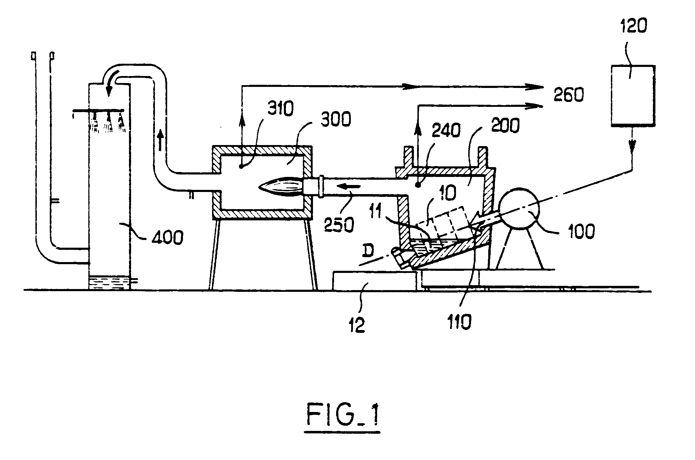

Le schéma de la figure 1 montre un dispositif de mise en oeuvre d'un procédé de vitrification de déchets enfermés dans un conteneur 10, lequel est représenté en pointillés sur la figure 1 sous la forme d'un fût cylindrique en acier. Ce dispositif comprend un générateur 100 haute température à jet 110 de chaleur dirigé selon un axe D et dont la température de jet est $T_j$. A titre d'exemple, le générateur 100 haute température de la figure 1 peut être une torche à plasma ou un générateur mixte gaz-électricité comme un électrobrûleur, dont l'unité 120 de commande renferme les circuits d'alimentation électrique, d'alimentation en air et de refroidissement. En fonctionnement, la température du jet 110 de chaleur est de l'ordre de 4000 à 5000°C pour une torche à plasma, et de 2600°C pour un électrobrûleur.

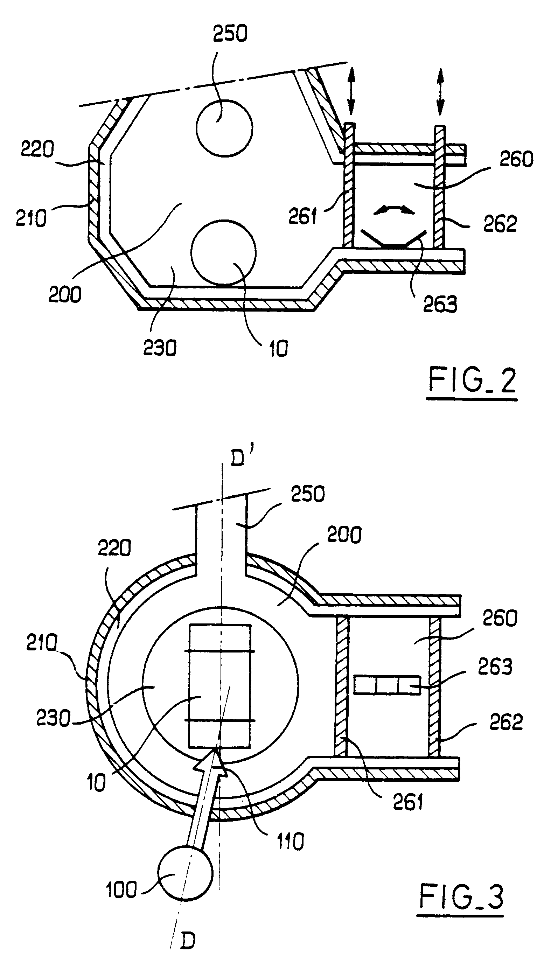

Le générateur 100 haute température débouche dans un four cylindrique 200 qui peut être vertical ou horizontal, fixe ou basculant, et dont les parois 210 sont recouvertes d'un réfractaire 220 comme indiqué aux figures 2 et 3. Sous l'effet du générateur haute température, le four prend une température moyenne $T_f$ qui peut varier de 1000 à 1900°C, généralement 1500°C, mais toujours supérieure à la température de fusion $T_c$ du matériau constituant le conteneur. Ce four peut être par exemple une poche sidérurgique.

Comme le montrent les figures 1, 2 et 3, le conteneur 10 est placé à l'intérieur du four sur l'axe D du jet 110 de chaleur à l'aide de moyens qui, dans l'exemple donné, sont constitués par un fond 230 sensiblement en forme de U aménagé dans le four 200. La différence de température $T_f$-

$T_c$ est ajustée de telle sorte que, dans une première étape du procédé de vitrification précédant la fusion du conteneur 10, le jet 110 de chaleur perce localement le conteneur 10 et amène les déchets ainsi confinés à une température $T_d$ supérieure à la température moyenne $T_f$ du four, les températures vérifiant alors les inégalités :

$$T_j > T_d > T_f > T_c.$$

L'avantage du procédé de vitrification décrit est de permettre, pendant un certain temps, un confinement des déchets dans le conteneur 10, lesquels, soumis directement au jet 110 de chaleur, peuvent atteindre une température $T_d$ de 2000°C par exemple, supérieure à la température $T_f$ du four, typiquement 1500°C. Il en résulte une vitrification accélérée des déchets, et notamment des cendres volantes riches en métaux lourds qui ne peuvent alors s'échapper du conteneur et être entraînées hors du four avant vitrification.

Puis, dans une deuxième étape suivant la fusion du conteneur 10, la vitrification complète du conteneur et des déchets en un magma vitreux 11 est réalisé à une température sensiblement égale à la température moyenne $T_f$ du four 200. Enfin, le magma vitreux 11 est récupéré hors du four à l'aide de moyens 12 de récupération qui peuvent être constitués par un moule dans lequel le magma est coulé. Les contenus du moule provenant de la vitrification de plusieurs conteneurs sont alors empilés dans des fûts, par exemple, et stockés dans des décharges ordinaires non classées, compte tenu du caractère parfaitement inerte du produit de vitrification. Les moyens 12 de récupération du magma vitreux 11 peuvent être également constitués par un bac rempli d'eau dans lequel le magma est coulé. En présence de l'eau, le magma éclate en morceaux susceptibles d'être récupérés pour différentes utilisations. La coulée du magma vitreux peut être réalisée à travers un orifice situé au fond du four, comme dans l'exemple de la figure 1, ou par un orifice situé juste au-dessus de la surface du liquide en fusion, le four étant basculé autour d'un axe fixe à l'aide d'un vérin.

La différence de température $T_f$-$T_c$ ne doit pas être trop grande de manière à permettre au conteneur de ne pas fondre trop rapidement et ainsi de maintenir les déchets confinés dans le conteneur pendant un temps suffisamment long. La température $T_f$ étant imposée par le générateur 100 haute température, les moyens pour ajuster la différence de température $T_f$-$T_c$ peuvent être des moyens de réglage de la puissance du générateur 100 haute température, ces moyens faisant partie de l'unité 120 de commande.

La vitrification étant réalisée dans un défaut d'air, les fumées primaires qui se forment dans le four 200 peuvent présenter un pouvoir calorifique résiduel. C'est pourquoi, le dispositif de la figure 1 comporte une unité 300 de post-combustion couplée au four 200 par une cheminée 250 et fonctionnant à une température de l'ordre de 1200°C.

Avant d'introduire dans le four 200 un nouveau conteneur, il est nécessaire de savoir si le conteneur 10 encore présent dans le four est complètement vitrifié. Dans ce but, le dispositif de la figure 1 comporte des capteurs 240, 310 de mesure de paramètres représentatifs de fin de vitrification, afin de commander l'introduction dans le four 200 du conteneur suivant. Un tel dispositif est bien adapté à un fonctionnement en automatique de l'entrée des conteneurs 10 en liaison avec le sas 260 qui sera décrit plus loin.

Lorsque les fumées primaires produites par la vitrification ne présentent pas de pouvoir calorifique, cas de la laine de verre par exemple, ledit capteur est un capteur 240 de mesure de la température du four 200 placé dans le four lui-même ou en sortie. Lorsque la température mesurée augmente, la vitrification est terminée puisque tous les produits à traiter sont fondus et qu'aucune chaleur latente ne doit plus être fournie.

Lorsque les fumées primaires présentent un pouvoir calorifique résiduel, cas des produits contenant du carbone par exemple, ledit capteur est un capteur 310 de mesure de la teneur, dans l'unité 300 de post-combustion, d'un gaz résultant de la combustion complète desdites fumées primaires. Ce gaz peut être du monoxyde ou du dioxyde de carbone. L'indication de fin de vitrification est donnée par une teneur avoisinant zéro du gaz de référence.

Les fumées secondaires sortant de l'unité 300 de post-combustion sont traitées de façon classique par un système 400 de refroidissement par trempe et lavage utilisant une solution de soude. Cette opération permet d'abaisser la température à 100°C et de neutraliser sous forme de sels de sodium les composés constitutifs des produits vitrifiés.

Comme l'indiquent les figures 2 et 3, le four 200 comporte un sas latéral 260 à deux vannes 261, 262 haute température comprenant un moyen 263 de basculement du conteneur à l'intérieur du four 200. Les vannes 261 et 262 et le moyen 263 de basculement peuvent être commandés automatiquement à partir des indications des capteurs 240, 310.

Afin d'éviter la présence d'un point froid au niveau de la vanne intérieure 261, entraînant la formation d'un bouchon de magma empêchant l'ouverture de ladite vanne, on prévoit que l'axe D du jet 110 de chaleur est disposé par rapport au four 200 de façon à assurer un courant de chaleur circulaire. La figure 3 montre que ce résultat est obtenu en inclinant légèrement l'axe D du jet 110 par rapport à l'axe D' du four 200.

On a ainsi décrit un procédé particulièrement efficace pour détruire, sans préjudice pour l'environnement, des déchets tels que

- l'amiante
- les déchets hospitaliers
- les boues des stations d'épuration
- les boues industrielles
- les pneumatiques
- les plastiques des véhicules automobiles
- les PCB, les gaz dangereux et la destruction des odeurs désagréables.

**Revendications**

1. Procédé de vitrification de déchets enfermés dans un conteneur (10), caractérisé en ce que ledit conteneur étant réalisé en un matériau de température de fusion $T_c$, ledit procédé comprend les étapes consistant, dans un four (200) porté à une température moyenne $T_f$ supérieure à $T_c$ par un générateur (100) haute température à jet (110) de chaleur dirigé selon un axe D et dont la température de jet est $T_j$,

   - à placer le conteneur (10) dans le four (200), sur l'axe D dudit jet (110) de chaleur, la différence de température $T_f-T_c$ étant ajustée de telle sorte que, dans une première étape précédant la fusion du conteneur, ledit jet de chaleur perce localement ledit conteneur (10) et amène les déchets ainsi confinés à une température $T_d$ supérieure à la température moyenne $T_f$ du four, les températures vérifiant alors les inégalités :

   $$T_j > T_d > T_f > T_c ,$$

   - à réaliser, dans une deuxième étape suivant la fusion du conteneur (10), la vitrification complète en défaut d'air du conteneur et des déchets en un magma vitreux (11), à une température sensiblement égale à la température moyenne $T_f$ du four (200),
   - à récupérer ledit magma vitreux (11) hors du four (200).

2. Procédé selon la revendication 1, caractérisé en ce qu'un paramètre significatif de la fin de vitrification est mesuré afin de commander l'introduction dans le four (200) d'un nouveau conteneur.

3. Procédé selon la revendication 2, caractérisé en ce que, la vitrification produisant des fumées primaires dépourvues de pouvoir calorifique, ledit paramètre est la température du four (200).

4. Procédé selon l'une des revendications 1 ou 2, caractérisé en ce que, la vitrification produisant des fumées primaires présentant un pouvoir calorifique résiduel, lesdites fumées primaires sont traitées par une unité (300) de post-combustion couplée au four (200).

5. Procédé selon les revendications 2 et 4, caractérisé en ce que, ledit paramètre est la teneur, dans l'unité (300) de post-combustion, d'un gaz résultant de la combustion desdites fumées primaires.

6. Procédé selon la revendication 5, caractérisé en ce que ledit gaz est du monoxyde ou du dioxyde de carbone.

7. Dispositif de mise en oeuvre du procédé selon la revendication 1, caractérisé en ce que ledit dispositif comprend :
   - un générateur (100) haute température à jet (110) de chaleur dirigé selon un axe D,
   - un four (200) dans lequel débouche ledit générateur haute température,
   - des moyens pour placer ledit conteneur (10) sur l'axe D du jet de chaleur,
   - des moyens pour ajuster la différence de température $T_f$-$T_c$,
   - des moyens (12) de récupération dudit magma vitreux (11) hors du four (200).

8. Dispositif selon la revendication 7, caractérisé en ce qu'il comporte au moins un capteur (240, 310) de mesure d'un paramètre représentatif de la fin de vitrification.

9. Dispositif selon la revendication 8, caractérisé en ce que ledit capteur est un capteur (240) de mesure de la température du four (200).

10. Dispositif selon l'une des revendications 7 ou 8, caractérisé en ce qu'il comporte une unité (300) de post-combustion couplée au four (200).

11. Dispositif selon les revendications 8 et 10, caractérisé en ce que ledit capteur est un capteur (310) de mesure de la teneur, dans l'unité (300) de post-combustion, d'un gaz résultant de la combustion des fumées primaires produites lors de la vitrification.

12. Dispositif selon la revendication 11, caractérisé en ce que ledit capteur est un capteur (310) de mesure de la teneur en monoxyde ou dioxyde de carbone.

13. Dispositif selon l'une quelconque des revendications 7 à 12, caractérisé en ce que lesdits moyens pour placer ledit conteneur (10) dans l'axe D du jet (110) de chaleur est un fond (230) sensiblement en forme de U aménagé dans le four (200).

14. Dispositif selon l'une quelconque des revendications 7 à 13, caractérisé en ce que lesdits moyens pour ajuster la différence de température $T_f$-$T_c$ sont des moyens de réglage de la puissance du générateur (100) haute température.

15. Dispositif selon l'une quelconque des revendications 7 à 14, caractérisé en ce que ledit four (200) comporte un sas latéral à deux vannes (261, 262) haute température comprenant un moyen (263) de basculement dudit conteneur (10).

16. Dispositif selon l'une quelconque des revendications 7 à 15, caractérisé en ce que ledit axe D du jet (110) de chaleur est disposé par rapport au four (200) de façon à assurer un courant de chaleur circulaire.

17. Dispositif selon l'une quelconque des revendications 7 à 16, caractérisé en ce que le générateur (100) haute température est une torche à plasma.

18. Dispositif selon l'une quelconque des revendications 7 à 16, caractérisé en ce que le générateur (100) haute température est un électrobrûleur.

19. Dispositif selon l'une quelconque des revendications 7 à 18, caractérisé en ce que lesdits moyens (12) de récupération sont constitués par un moule dans lequel le magma vitreux (11) est coulé.

20. Dispositif selon l'une quelconque des revendications 7 à 18, caractérisé en ce que lesdits moyens (12) de récupération sont constitués par un bac rempli d'eau dans lequel le magma vitreux (11) est coulé.

**Claims**

1. Process for vitrification of waste enclosed in a container (10), characterized in that, the said container being made of a material of melting temperature $T_c$, the said process comprises the stages consisting, in a furnace (200) heated to a mean temperature $T_f$ which is higher than $T_c$ by a high-temperature generator (100) with a heat jet (110) directed along an axis D and in which the jet temperature is $T_j$,

- in placing the container (10) in the furnace (200) on the axis D of the said heat jet (110), the temperature difference $T_f$-$T_c$ being adjusted so that, in a first stage preceding the melting of the container, the said heat jet pierces the said container (10) locally and brings the waste thus confined to a temperature $T_w$ which is higher than the mean temperature $T_f$ of the furnace, the temperatures then obeying the inequalities:

$$T_j > T_w > T_f > T_c$$

- in performing, in a second stage following the melting of the container (10), the complete vitrification, with air deficiency, of the container and of the waste into a vitreous magma (11), at a temperature substantially equal to the mean temperature $T_f$ of the furnace (200),
- in recovering the said vitreous magma (11) out of the furnace (200).

2. Process according to Claim 1, characterized in that a significant parameter of the end of vitrification is measured in order to order the introduction of a new container into the furnace (200).

3. Process according to Claim 2, characterized in that, with the vitrification producing primary fumes devoid of calorific power, the said parameter is the temperature of the furnace (200).

4. Process according to either of Claims 1 and 2, characterized in that, with the vitrification producing primary fumes exhibiting a residual calorific power, the said primary fumes are treated by a postcombustion unit (300) coupled to the furnace (200).

5. Process according to Claims 2 and 4, characterized in that the said parameter is the content, in the postcombustion unit (300), of a gas resulting from the combustion of the said primary fumes.

6. Process according to Claim 5, characterized in that the said gas is carbon monoxide or dioxide.

7. Device for implementing the process according to Claim 1, characterized in that the said device comprises:
- a high-temperature generator (100) with a heat jet (110) directed along an axis D,
- a furnace (200) into which the said high-temperature generator opens out,
- means for placing the said container (10) on the axis D of the heat jet,
- means for adjusting the temperature difference $T_f$-$T_c$,
- means (12) for recovering the said vitreous magma (11) out of the furnace (200).

8. Device according to Claim 7, characterized in that it comprises at least one sensor (240, 310) for measuring a parameter representing the end of vitrification.

9. Device according to Claim 8, characterized in that the said sensor is a sensor (240) for measuring the temperature of the furnace (200).

10. Device according to either of Claims 7 and 8, characterized in that it includes a postcombustion unit (300) coupled to the furnace (200).

11. Device according to Claims 8 and 10, characterized in that the said sensor is a sensor (310) for measuring the content, in the postcombustion unit (300), of a gas resulting from the combustion of the primary fumes produced during the vitrification.

12. Device according to Claim 11, characterized in that the said sensor is a sensor (310) for measuring the content of carbon monoxide or dioxide.

13. Device according to any one of Claims 7 to 12, characterized in that the said means for placing the said container (10) on the axis D of the heat jet (110) is a substantially U-shaped bottom (230) arranged in the furnace (200).

14. Device according to any one of Claims 7 to 13, characterized in that the said means for adjusting the temperature difference $T_f$-$T_c$ are means for regulating the power of the high-temperature generator (100).

15. Device according to any one of Claims 7 to 14, characterized in that the said furnace (200) comprises a side gas lock with two high-temperature valves (261, 262) comprising a means (263) for tipping the said container (10).

**16.** Device according to any one of Claims 7 to 15, characterized in that the said axis D of the heat jet (110) is arranged in relation to the furnace (200) so as to ensure a circular heat current.

**17.** Device according to any one of Claims 7 to 16, characterized in that the high-temperature generator (100) is a plasma torch.

**18.** Device according to any one of Claims 7 to 16, characterized in that the high-temperature generator (100) is an electroburner.

**19.** Device according to any one of Claims 7 to 18, characterized in that the said means (12) of recovery consist of a mould in which the vitreous magma (11) is cast.

**20.** Device according to any one of Claims 7 to 18, characterized in that the said means (12) of recovery consist of a trough filled with water in which the vitreous magma (11) is cast.

**Patentansprüche**

**1.** Verfahren zum verglasen von Abfällen, die in einen Behälter (10) eingeschlossen sind, dadurch gekennzeichnet, daß der Behälter aus einem Material mit einer Schmelztemperatur $T_c$ hergestellt ist, wobei das Verfahren die Schritte umfaßt, die daraus bestehen, in einen Ofen (200), der auf einer mittleren Temperatur $T_f$ gehalten ist, die über einer Temperatur $T_c$ liegt, durch einen Hochtemperatur-Generator (100) mit Hitzestrahl (110), der entlang einer Achse D gerichtet ist und wobei die Temperatur des Strahles $T_j$ beträgt,

- den Behälter (10) in den Ofen (200) zu bringen, auf die Achse D des Hitzestrahls (110), wobei die Temperaturdifferenz $T_f$ - $T_c$ derart eingestellt wird, daß in einer ersten Stufe, die dem Schmelzen des Behälters vorangeht, der Hitzestrahl lokal den Behälter (10) durchbricht und die so eingeschlossenen Abfälle auf eine Temperatur $T_d$ bringt, die höher liegt als die mittlere Temperatur $T_f$ des Ofens, wobei die Temperaturen dann die Ungleichungen erfüllen:

$$T_j > T_d > T_f > T_c,$$

- in einer zweiten Stufe anschließend an das Schmelzen des Behälters (10) die vollständige Verglasung des Behälters und der Abfälle unter Luftabschluß zu einem glasartigen Magma (11) vorzunehmen, bei einer Temperatur, die im wesentlichen gleich der mittleren Temperatur $T_f$ des Ofens (200) ist,
- das glasartige Magma (11) aus dem Ofen (200) wiederzugewinnen.

**2.** Verfahren nach Anspruch 1 dadurch gekennzeichnet, daß ein Parameter, der für das Ende der Verglasung signifikant ist, gemessen wird, um das Einbringen eines neuen Behälters in den Ofen (200) zu steuern.

**3.** Verfahren nach Anspruch 2, dadurch gekennzeichnet, daß, wenn die Verglasung primäre Abgase ohne kalorische Leistung erzeugt, der Parameter die Temperatur des Ofens (200) ist.

**4.** Verfahren nach einem der Ansprüche 1 oder 2, dadurch gekennzeichnet, daß, wenn die Verglasung primäre Abgase erzeugt, die eine kalorische Restleistung zeigen, die primären Abgase durch eine Nachverbrennungseinheit (300) behandelt werden, die an den Ofen (200) gekoppelt ist.

**5.** Verfahren nach den Ansprüchen 2 und 4, dadurch gekennzeichnet, daß der Parameter der Gehalt eines Gases in der Nachverbrennungseinheit (300) ist, das sich aus der Verbrennung der genannten primären Abgase ergibt.

**6.** Verfahren nach Anspruch 5, dadurch gekennzeichnet, daß das Gas Kohlenmonoxid oder -dioxid ist.

**7.** Vorrichtung zum Durchführen eines Verfahrens nach Anspruch 1, dadurch gekennzeichnet, daß die Vorrichtung umfaßt:
- einen Hochtemperatur-Generator (100) mit einem Hitzestrahl (110), der entlang einer Achse D gerichtet ist,
- einen Ofen (200), in den der Hochtemperator-Generator mündet,
- Einrichtungen, um den Behälter (10) auf die Achse D des Hitzestrahls zu bringen,
- Einrichtungen zum Einstellen der Temperaturdifferenz $T_f$ - $T_c$,
- Wiedergewinnungseinrichtungen (12) für das glasartige Magma (11) aus dem Ofen (200).

**8.** Vorrichtung nach Anspruch 7, dadurch gekennzeichnet, daß sie wenigstens einen Meßaufnehmer (240, 310) für einen Parameter, der für das Ende der Verglasung repräsentativ ist, umfaßt.

**9.** Vorrichtung nach Anspruch 8, dadurch gekennzeichnet, daß der Aufnehmer ein Meßaufnehmer (240) für die Temperatur des Ofens (200) ist.

10. Vorrichtung nach einem der Ansprüche 7 oder 8, dadurch gekennzeichnet, daß sie eine Nachverbrennungseinheit (300) aufweist, die an den Ofen (200) gekoppelt ist.

11. Vorrichtung nach den Ansprüchen 8 und 10, dadurch gekennzeichnet, daß der Aufnehmer ein Meßaufnehmer (310) für den Gehalt eines Gases in der Verbrennungseinheit (300) ist, das aus der Verbrennung der primären Abgase, die während der Verglasung erzeugt werden, herrührt.

12. Vorrichtung nach Anspruch 11, dadurch gekennzeichnet, daß der Aufnehmer ein Meßaufnehmer (310) für den Gehalt an Kohlenmonoxid oder -dioxid ist.

13. Vorrichtung nach einem der Ansprüche 7 bis 12, dadurch gekennzeichnet, daß die Einrichtungen zum Einrichten des Behälters (10) auf die Achse D des Hitzestrahls (11) aus einem Boden (230) bestehen, der im wesentlichen die Form eines U hat und in dem Ofen (200) untergebracht ist.

14. Vorrichtung nach einem der Ansprüche 7 bis 13, dadurch gekennzeichnet, daß die Einrichtungen zum Einstellen der Temperaturdifferenz $T_f$ - $T_c$ Einrichtungen zum Regeln der Leistung des Hochtemperatur-Generators (100) sind.

15. Vorrichtung nach einem der Ansprüche 7 bis 14, dadurch gekennzeichnet, daß der Ofen (200) eine seitliche Schleuse mit zwei Hochtemperatur-Schiebern (261, 262) umfaßt, die eine Einrichtung (263) zum Verschwenken des Behälters (10) aufweist.

16. Vorrichtung nach einem der Ansprüche 7 bis 15, dadurch gekennzeichnet, daß die Achse D des Hitzestrahls (110) in Bezug auf den Ofen (200) derart angeordnet ist, daß ein kreisförmiger Wärmestrom gewährleistet ist.

17. Vorrichtung nach einem der Ansprüche 7 bis 16, dadurch gekennzeichnet, daß der Hochtemperatur-Generator (100) ein Plasmabrenner ist.

18. Vorrichtung nach einem der Ansprüche 7 bis 16, dadurch gekennzeichnet, daß der Hochtemperator-Generator (100) ein Elektrobrenner ist.

19. Vorrichtung nach einem der Ansprüche 7 bis 18, dadurch gekennzeichnet, daß die Wiedergewinnungseinrichtungen (12) aus einer Form gebildet sind, in die das glasartige Magma (11) gegossen wird.

20. Vorrichtung nach einem der Ansprüche 7 bis 18, dadurch gekennzeichnet, daß die Wiedergewinnungseinrichtungen (12) aus einem mit Wasser gefüllten Bottich gebildet sind, in den das glasartige Magma (11) gegossen wird.

FIG_1

FIG_2

FIG_3